# EUROPÄISCHE PATENTSCHRIFT

(11) **EP 3 865 197 B1**
(45) Veröffentlichungstag und Bekanntmachung des Hinweises auf die Patenterteilung: **07.05.2025**
(21) Anmeldenummer: 20156944.9
(22) Anmeldetag: 12.02.2020
(51) Int. Cl.: B01D 39/16, B01D 39/20

(54) **FILTERMEDIUM MIT MEHREREN SCHICHTEN**
MULTIPLE LAYER FILTER MEDIUM
MOYEN FILTRANT À PLUSIEURS COUCHES

(43) Veröffentlichungstag der Anmeldung: 18.08.2021
(73) Patentinhaber: Carl Freudenberg KG, 69469 Weinheim (DE)
(72) Erfinder: Stahl, Ulrich, 69514 Laudenbach (DE); Arnold, Anette, 64342 Seeheim-Jugenheim (DE); Scholz, Tobias, 68519 Viernheim (DE); Göbel, Jan Thomas, 69488 Birkenau (DE)

(56) Entgegenhaltungen:
- EP-A1- 1 932 576
- US-A1- 2017 320 001

## Beschreibung

Die Erfindung betrifft ein Filtermedium gemäß dem Oberbegriff von Anspruch 1.

### Stand der Technik

Aus der EP 1 932 576 A1 ist ein Filterelement zur Reinigung eines Luftstroms mit einem Filtermedium aus einer Mehrzahl von Vliesstofflagen und Adsorberlagen bekannt, wobei das Filtermedium mehrfach gefaltet ist und wobei die Vliesstofflagen und die Adsorberlagen parallel zueinander angeordnet sind. Das Filtermedium weist zwei oder drei aufeinander aufliegende Schichten auf, wobei die Schichten jeweils bestehen aus einer Adsorberlage, auf welcher beidseitig Vliesstofflagen angebracht sind. Dokument US 2017/320001 A1 offenbart auch ein Filtermedium zur Reinigung eines Luftstroms mit einer Mehrzahl von Vliesstofflagen und Adsorberlagen wobei die Vliesstofflagen und die Adsorberlagen parallel zueinander angeordnet sind.

Nachteilig dabei ist, dass immer zwei Vliesstofflagen innenliegend im Filtermedium aufeinander aufliegen, was in einer für die Funktion des Filterelements unnötige Doppelung der innenliegenden Vliesstofflagen, in einer größeren Dicke des Filtermediums und in einem entsprechenden Materialmehrverbrauch resultiert.

### Aufgabenstellung

Aufgabe der vorliegenden Erfindung ist es, ein Filtermedium zu schaffen, in welchem der Materialeinsatz optimiert ist und welches bei entsprechender Funktionalität eine geringere Dicke im Vergleich zu aus dem Stand der Technik bekannten Filtermedien aufweist.

### Technische Lösung

Gelöst wird diese Aufgabe durch ein Filtermedium mit den Merkmalen von Anspruch 1.

Erfindungsgemäß wurde als vorteilhaft erkannt das Filtermedium so aufzubauen, dass sich Vliesstofflagen und Adsorberlagen immer abwechseln:
Das erfindungsgemäße Filtermedium dient der Reinigung eines Luftstroms und besitzt eine Mehrzahl von Vliesstofflagen und Adsorberlagen, wobei die Vliesstofflagen und die Adsorberlagen parallel zueinander angeordnet sind. Unter einem Vliesstoff wird hierbei insbesondere ein Vliesstoff gemäß der Definition von ISO 9092:2019 (Nonwovens) verstanden. Demgemäß werden auch Komposite ("nonwoven composites"), welche mehrere Vliesstoffe aufweisen, sowie Vliesstoffe, die mit weiteren Materiallagen kombiniert sind, als Vliesstoffe angesehen. Vliesstofflagen sind Lagen aus Vliesstoff und Adsorberlagen sind Lagen aufweisend Adsorbentien. In vorteilhafter Weise besitzt das Filtermedium mindestens zwei aufeinander aufliegende Schichten, mit einer ersten Schicht bestehend aus einer Vliesstofflage, die mit einer Adsorberlage verbunden ist, und mit einer zweiten Schicht, bestehend aus einer Adsorberlage, auf welcher beidseitig Vliesstofflagen angebracht sind. Ein solches Filtermedium weist somit zumindest zwei Schichten und fünf Lagen (zwei Lagen der ersten Schicht plus drei Lagen der zweiten Schicht) auf. Eine jeweilige Vliesstofflage kann eine oder mehrere Vliesstoffteillagen besitzen. Im Fall von mehreren Vliesstoffteillagen bilden diese zusammen die Vliesstofflage als Komposit. Ein so aufgebautes Filtermedium hat den Vorteil, dass keine Doppelung von Vliesstofflagen vorliegt. Im Vergleich zu Filtermedien mit einer Doppelung von Vliesstofflagen ist das erfindungsgemäße Filtermedium dünner und materialeffizienter aufgebaut. Dadurch wird ein geringerer Druckverlust und somit eine höhere Filtrationsleistung des Filtermediums ermöglicht.

In erfindungsgemäßen Filtermedium weisen die innenliegenden Vliesstofflagen des Filtermediums eine geringere Dicke und einen höheren Abscheidegrad auf als die außenliegenden Vliesstofflagen des Filtermediums. Unter innenliegenden Vliesstofflagen werden solche Lagen verstanden, an welche sich zu beiden Seiten weitere Lagen anschließen. Unter einer außenliegenden Vliesstofflage wird eine Lage verstanden, die das Filtermedium begrenzt und bei der nur auf einer Seite der Vliesstofflage eine weitere Lage anliegt. Die Dicke der innenliegenden Vliesstofflagen kann insbesondere weniger als einen Millimeter betragen, wobei die Dicke gem. DIN EN ISO 9073-2:1997-02 zu bestimmen ist. Der Abscheidegrad der innenliegenden Vliesstofflagen kann insbesondere im Bereich von zumindest EPA Filtern (Efficient Particulate Air Filter) gemäß der EN 1822-1:2009 liegen, d.h. einen Abscheidegrad von über 85 % besitzen. Bei dieser innenliegenden Vliesstofflage kann es sich bevorzugter Weise um eine Nanofaservliesstofflage oder eine Membranlage handeln. Solche Membranlagen können beispielsweise aus einem Trägervlies und einer auflaminierten Folie gebildet werden.

In vorteilhafter Weiterbildung des erfindungsgemäßen Filtermediums weist dieses zusätzlich eine dritte Schicht auf, wobei die dritte Schicht aus einer Adsorberlage besteht, die mit einer Vliesstofflage verbunden ist. Die zweite Schicht ist bei diesem Filtermedium zwischen der ersten Schicht und der dritten Schicht angeordnet. Dadurch wird erreicht, dass Vliesstofflagen und Adsorberlagen immer abwechselnd parallel zueinander angeordnet sind.

In einer besonders vorteilhaften und daher bevorzugten Weiterbildung des erfindungsgemäßen Filtermediums ist das Filtermedium mehrfach gefaltet, insbesondere plissiert und zwar derart, dass eine Vielzahl von Faltenkanten und zwischen den Faltkanten liegenden Faltflächen ausgebildet wird. Die Schichten des Filtermediums sind formschlüssig miteinander verbunden, d.h. die Schichten liegen aufeinander auf indem Faltflächen und Faltkanten der verschiedenen Schichten einander berühren und die Schichten können deshalb nicht relativ zueinander verrutschen.

In Weiterbildung des erfindungsgemäßen Filtermediums sind die Schichten stoffschlüssig miteinander verbunden, insbesondere durch Verschweißen oder Verkleben. Im Falle des Verschweißens erfolgt die stoffschlüssige Verbindung punktuell oder linienförmig. Im Falle des Verklebens kann ein sogenannter Laminierkleber flächig auf die Schichten aufgebracht und die Schichten somit auch flächig miteinander verbunden sein.

In einer möglichen Ausgestaltung des Filtermediums besitzt dieses einen progressiven Aufbau derart, dass die Porosität der Vliesstofflagen, oder zumindest der innenliegenden Vliesstofflagen von einer Anströmseite (Rohgasseite) zu einer Abströmseite (Reingasseite) des Filtermediums von einer Vliesstofflage zur nächsten Vliesstofflage graduell abnimmt. Unter Porosität wird hier das Verhältnis von Hohlraumvolumen zu Gesamtvolumen einer jeweiligen Vliesstofflage verstanden. Ein derartiges Filtermedium bietet eine besonders gute Staubfiltration.

Als Adsorbentien der Adsorberlagen des Filtermediums können Aktivkohle Zeolithe, Mischoxidkatalysatoren, Silicatgel (Kieselgel) oder ähnliches eingesetzt werden. In einer besonders vorteilhaften Ausgestaltung des Filtermediums beinhalten die Adsorberlagen Granulat oder Pulver aus Aktivkohle. In den Adsorberlagen können neben reiner Aktivkohle auch Mischungen mit Aktivkohle eingesetzt werden, welche zusätzlich Imprägnierungen, Füllstoffe und/oder Binder aufweisen.

Das Filtermedium kann in einem Filterelement verwendet werden, welches in der Luftfiltration des Innenraums eines Kraftfahrzeugs eingesetzt wird.

Die beschriebene Erfindung und die beschriebenen vorteilhaften Weiterbildungen der Erfindung stellen auch in Kombination miteinander - soweit dies technisch sinnvoll ist - vorteilhafte Weiterbildungen der Erfindung dar.

Hinsichtlich weiterer Vorteile und in konstruktiver und funktioneller Hinsicht vorteilhafter Ausgestaltungen der Erfindung wird auf die Unteransprüche sowie die Beschreibung von Ausführungsbeispielen unter Bezugnahme auf die beiliegenden Figuren verwiesen.

### Ausführungsbeispiel

Die Erfindung soll an Hand beigefügter Figuren noch näher erläutert werden. Einander entsprechende Elemente und Bauteile sind in den Figuren mit gleichen Bezugszeichen versehen. Zugunsten einer besseren Übersichtlichkeit der Figuren wurde auf eine maßstabsgetreue Darstellung verzichtet.

Es zeigen in schematischer Darstellung
- Fig. 1: eine Ausführung eines Filtermediums mit zwei Schichten
- Fig. 2: eine andere Ausführung eines Filtermediums mit zwei Schichten
- Fig. 3: eine Ausführung eines Filtermediums mit drei Schichten
- Fig. 4: eine andere Ausführung eines Filtermediums mit drei Schichten
- Fig. 5: eine andere Ausführung eines Filtermediums mit drei Schichten

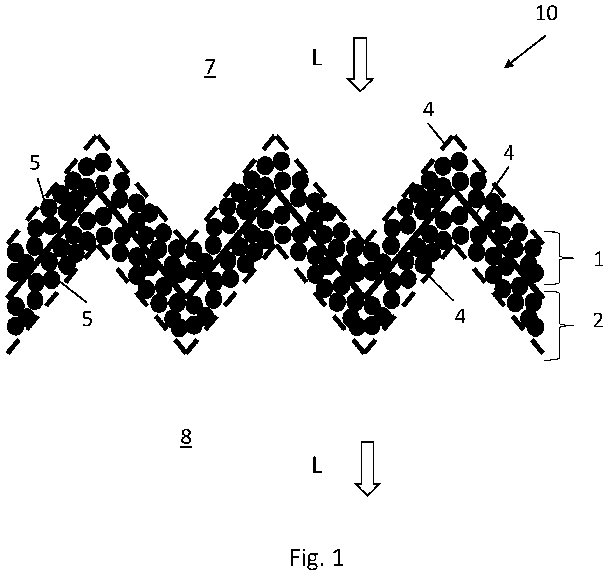

Fig. 1 zeigt ein Filtermedium 10, welches von einem Luftstrom L von einer Anströmseite 7, der Rohgasseite, hin zur Abströmseite 8, der Reingasseite, durchströmt wird und den Luftstrom L dabei reinigt. Diese Richtung der Durchströmung des Filtermediums 10 mit einem Luftstrom L gilt auch für die nachfolgenden Figuren.

Das Filtermedium 10 aus Fig. 1 besitzt zwei Schichten, eine erste Schicht 1 und eine zweite Schicht 2. Die erste Schicht 1 besteht aus einer Vliesstofflage 4 und einer Adsorberlage 5. Die zweite Schicht 2 besteht aus einer Vliesstofflage 4, einer Adsorberlage 5 und einer weiteren Vliesstofflage 4. Die Adsorberlage 5 wird beidseitig von den Vliesstofflagen 4 bedeckt.

Alle Lagen 4, 5 der Schichten 1, 2 sind parallel zueinander angeordnet und die Schichten 1, 2 liegen aufeinander auf. Das Filtermedium 10 ist plissiert und besitzt eine Vielzahl von Faltkanten und zwischen den Faltkanten liegenden Faltflächen. Durch das Plissieren bzw. dank dem Plissee werden die Schichten 1, 2 formschlüssig miteinander verbunden. Zusätzlich können die Schichten 1, 2 auch noch stoffschlüssig miteinander verbunden sein (hier nicht dargestellt). Eine solche stoffschlüssige Verbindung kann durch Verschweißen oder Verkleben erfolgen.

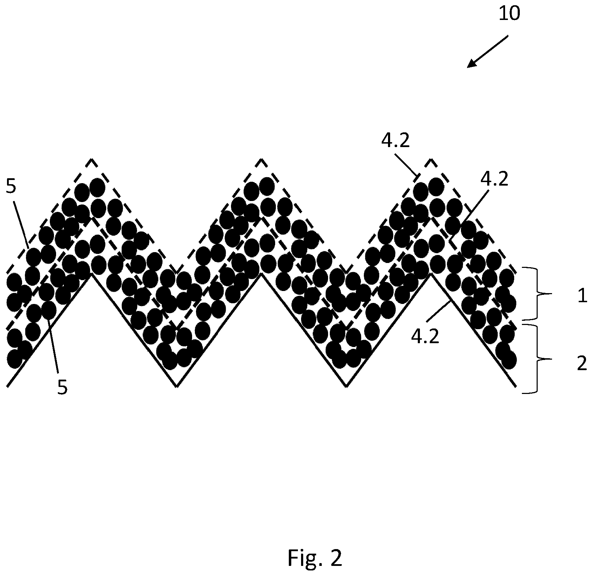

Das in Fig. 2 dargestellte Filtermedium 10 weist ebenfalls einen Aufbau mit einer ersten Schicht 1 und einer zweiten Schicht 2 auf. Im Gegensatz zum Filterelement 10 aus Fig. 1 besitzt das Filtermedium 10 jedoch einen progressiven Aufbau. Der progressive Aufbau des Filtermediums 10 wird realisiert, indem die Porosität der Vliesstofflagen 4, nämlich der Partikelfilterlagen 4.2 von der Anströmseite 7 zur Abströmseite 8 hin abnimmt. Eine jeweils nachfolgend durchströmte Partikelfilterlage 4.2 ist dichter gepackt als eine jeweils zuvor durchströmte Partikelfilterlage 4.2.

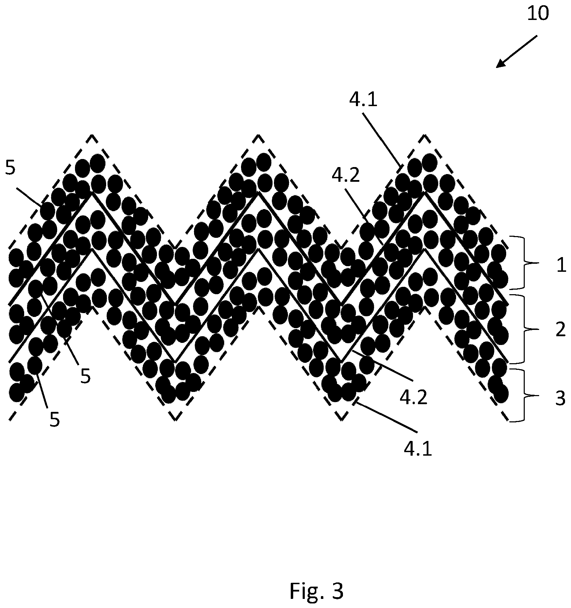

Fig. 3 zeigt ein Filtermedium 10 mit einer ersten Schicht 1, einer zweiten Schicht 2 und einer dritten Schicht 3. Die erste Schicht 1 besteht aus einer Vliesstofflage 4, die mit einer Adsorberlage 5 verbunden ist. Die Vliesstofflage 4 ist dabei als Trägerlage 4.1 ausgeführt. Bei der Trägerlage 4.1 handelt es sich um eine außenliegenden Vliesstofflage 4 des Filtermediums 10, welche eine höhere Steifigkeit und Stabilität als die innenliegenden Vliesstofflagen 4 aufweisen kann. Die innenliegenden Vliesstofflagen 4 können als Partikelfilterlagen 4.2 ausgebildet sein und dabei labil und für die Funktion der Partikelfiltration optimiert sein. Die zweite Schicht 2 besteht aus solchen Partikelfilterlagen 4.2, welche beidseitig auf einer Adsorberlage 5 angebracht sind. Die dritte Schicht 3 besteht aus einer Adsorberlage 5 und einer Trägerlage 4.1. Die zweite Schicht 2 ist zwischen der ersten Schicht 1 und der dritten Schicht 3 angeordnet, sodass sich Vliesstofflagen 4 und Adsorberlagen 5 immer abwechseln.

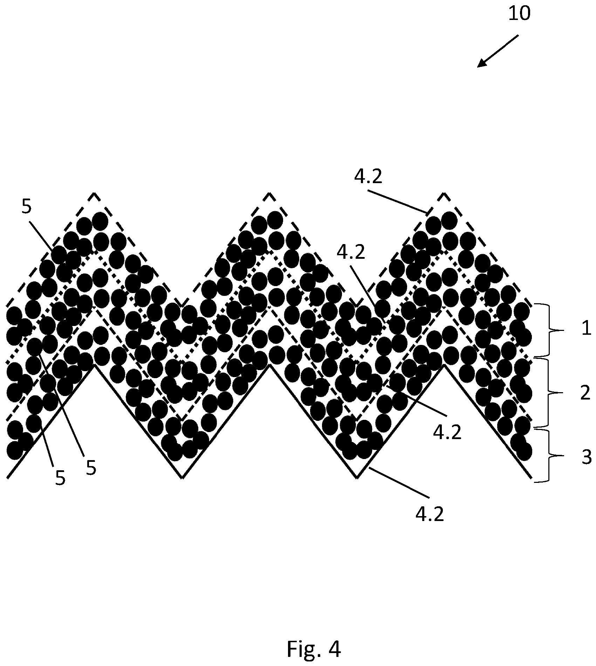

Auch das Beispiel von Fig. 4 zeigt ein Filtermedium 10 mit drei Schichten 1, 2, 3. Im Gegensatz zum Filtermedium 10 aus Fig. 3 sind alle Vliesstofflagen 4 als Partikelfilterlagen 4.2 ausgeführt. Das Filtermedium 10 besitzt, wie auch das Filtermedium 10 aus Fig. 2, einen progressiven Aufbau, d.h. die Porosität der Partikelfilterlagen 4.2 nimmt von der Anströmseite 7 zur Abströmseite 8 des Filtermediums 10 hin ab.

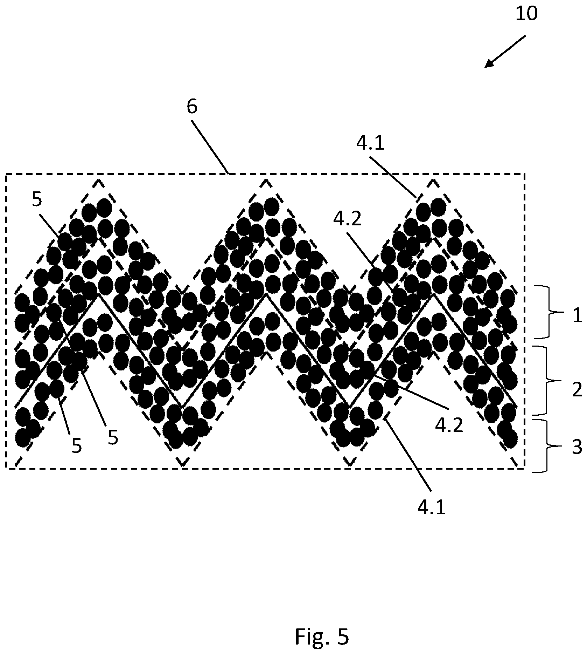

Auch das Filtermedium 10 aus Fig. 5 besitzt einen progressiven Aufbau mit drei Schichten 1, 2, 3. Im Gegensatz zu der Ausführung des Filtermediums 10 aus Fig. 4 wurden die außenliegenden Vliesstofflagen 4 jedoch als Trägerlagen 4.1 ausgebildet. Nur die innenliegenden Partikelfilterlagen 4.2 bewirken den progressiven Aufbau des Filtermediums 10, indem die Porosität der Partikelfilterlagen 4.2 von der Anströmseite 7 zur Abströmseite 8 des Filtermediums 10 hin abnimmt. In anderen Worten, die zuerst durchströmte Partikelfilterlage 4.2 weist eine höhere Porosität auf, als die später durchströmte Partikelfilterlage 4.2.

Um die Schichten 1, 2, 3 des Filtermediums 10 besser miteinander zu verbinden und ein Filterelement mit einer guten Gesamtstabilität zu schaffen, kann an den Enden der Faltkanten jeweils ein Kantenband 6 angebracht, insbesondere aufgeklebt werden. Ein solches Kantenband 6 ist gestrichelt in Fig. 5 angedeutet.

### Bezugszeichenliste

- 1: Erste Schicht
- 2: Zweite Schicht
- 3: Dritte Schicht
- 4: Vliesstofflage
- 4.1 4.2: Trägerlage Partikelfilterlage
- 5: Adsorberlage
- 6: Kantenband
- 7: Anströmseite (Rohgasseite)
- 8: Abströmseite (Reingasseite)

- 10: Filtermedium

- L: Luftstrom

## Patentansprüche

1. Filtermedium (10) zur Reinigung eines Luftstroms (L) mit einer Mehrzahl von Vliesstofflagen (4) und Adsorberlagen (5), wobei die Vliesstofflagen (4) und die Adsorberlagen (5) parallel zueinander angeordnet sind, wobei das Filtermedium (10) mindestens zwei aufeinander aufliegende Schichten (1, 2) aufweist, mit einer ersten Schicht (1) bestehend aus einer Vliesstofflage (4), die mit einer Adsorberlage (5) verbunden ist und einer zweiten Schicht (2) bestehend aus einer Adsorberlage (5), auf welcher beidseitig Vliesstofflagen (4) angebracht sind **dadurch gekennzeichnet, dass**
die innenliegenden Vliesstofflagen (4) des Filtermediums (10) eine geringere Dicke und höheren Abscheidegrad aufweisen als die außenliegenden Vliesstofflagen (4) des Filtermediums (10).

2. Filtermedium nach Anspruch 1
mit einer dritten Schicht (3) bestehenden aus einer Adsorberlage (5), die mit einer Vliesstofflage (4) verbunden ist, wobei die zweite Schicht (2) zwischen der ersten Schicht (1) und der dritten Schicht (3) angeordnet ist, sodass sich Vliesstofflagen 4 und Adsorberlagen 5 immer abwechseln.

3. Filtermedium nach einem der vorangehenden Ansprüche **dadurch**
**gekennzeichnet, dass**
das Filtermedium (10) mehrfach gefaltet ist und die Schichten (1, 2, 3) formschlüssig miteinander verbunden sind.

4. Filtermedium nach einem der vorangehenden Ansprüche, **dadurch**
**gekennzeichnet, dass**
die Schichten (1, 2, 3) stoffschlüssig miteinander verbunden sind, insbesondere durch Verschweißen oder Verkleben.

5. Filtermedium nach einem der vorangehenden Ansprüche **dadurch**
**gekennzeichnet, dass**
die innenliegenden Vliesstofflagen (4) des Filtermediums (10) als Nanofaservliesstofflage oder Membranlage ausgeführt sind.

6. Filtermedium nach einem der vorangehenden Ansprüche **dadurch**
**gekennzeichnet, dass**
das Filtermedium (10) einen progressiven Aufbau besitzt, derart, dass die Porosität der Vliesstofflagen (4) von einer Anströmseite (7) zu einer Abströmseite (8) des Filtermediums (10) abnimmt.

7. Filtermedium nach einem der vorangehenden Ansprüche **dadurch**
**gekennzeichnet, dass**
die Adsorberlagen (5) Granulat oder Pulver aus Aktivkohle beinhalten.

## Claims

1. Filter medium (10) for cleaning an air stream (L), comprising a plurality of nonwoven plies (4) and adsorber plies (5), wherein the nonwoven plies (4) and the adsorber plies (5) are arranged parallel to one another, wherein the filter medium (10) has at least two layers (1, 2) which lie one on top of the other and which comprise a first layer (1), consisting of a nonwoven ply (4) which is connected to an adsorber ply (5), and a second layer (2), consisting of an adsorber ply (5) to which nonwoven plies (4) are attached on both sides,
**characterized in that**
the inner nonwoven plies (4) of the filter medium (10) have a smaller thickness and greater separation efficiency than the outer nonwoven plies (4) of the filter medium (10).

2. Filter medium according to Claim 1,
which has a third layer (3) consisting of an adsorber ply (5) which is connected to a nonwoven ply (4), wherein the second layer (2) is arranged between the first layer (1) and the third layer (3), with the result that nonwoven plies 4 and adsorber plies 5 continually alternate.

3. Filter medium according to one of the preceding claims, **characterized in that**
the filter medium (10) is folded multiple times, and the layers (1, 2, 3) are connected to one another in a form-fitting manner.

4. Filter medium according to one of the preceding claims, **characterized in that**
the layers (1, 2, 3) are connected to one another in a cohesively bonded manner, in particular by welding or adhesive bonding.

5. Filter medium according to one of the preceding claims, **characterized in that**
the inner nonwoven plies (4) of the filter medium (10) are in the form of a nonwoven-nanofabric ply or membrane ply.

6. Filter medium according to one of the preceding claims, **characterized in that**
the filter medium (10) has a progressive structure such that the porosity of the nonwoven plies (4) decreases from an inflow side (7) to an outflow side (8) of the filter medium (10).

7. Filter medium according to one of the preceding claims, **characterized in that**
the adsorber plies (5) contain granules or powder composed of activated carbon.

## Revendications

1. Milieu filtrant (10) pour la purification d'un courant d'air (L) avec une pluralité de couches de tissu non tissé (4) et de couches d'adsorbant (5), les couches de tissu non tissé (4) et les couches d'adsorbant (5) étant agencées parallèlement les unes aux autres, le milieu filtrant (10) présentant au moins deux couches superposées (1, 2), avec une première couche (1) constituée d'une couche de tissu non tissé (4), qui est reliée à une couche d'adsorbant (5), et une deuxième couche (2) constituée d'une couche d'adsorbant (5), sur laquelle des couches de tissu non tissé (4) sont appliquées des deux côtés,
**caractérisé en ce que**
les couches de tissu non tissé (4) situées à l'intérieur du milieu filtrant (10) présentent une épaisseur plus faible et un degré de séparation plus élevé que les couches de tissu non tissé (4) situées à l'extérieur du milieu filtrant (10).

2. Milieu filtrant selon la revendication 1,
avec une troisième couche (3) constituée d'une couche d'adsorbant (5) qui est liée à une couche de tissu non tissé (4), la deuxième couche (2) étant agencée entre la première couche (1) et la troisième couche (3), de telle sorte que les couches de tissu non tissé 4 et les couches d'adsorbant 5 alternent toujours.

3. Milieu filtrant selon l'une quelconque des revendications précédentes, **caractérisé en ce que**
le milieu filtrant (10) est plié plusieurs fois et les couches (1, 2, 3) sont reliées entre elles par complémentarité de forme.

4. Milieu filtrant selon l'une quelconque des revendications précédentes, **caractérisé en ce que**
les couches (1, **2,** 3) sont reliées entre elles par liaison de matière, notamment par soudage ou collage.

5. Milieu filtrant selon l'une quelconque des revendications précédentes, **caractérisé en ce que**
les couches de tissu non tissé (4) situées à l'intérieur du milieu filtrant (10) sont réalisées sous forme de couche de tissu non tissé en nanofibres ou de couche de membrane.

6. Milieu filtrant selon l'une quelconque des revendications précédentes, **caractérisé en ce que**
le milieu filtrant (10) possède une structure progressive, de telle sorte que la porosité des couches de tissu non tissé (4) diminue d'un côté d'entrée (7) vers un côté de sortie (8) du milieu filtrant (10).

7. Milieu filtrant selon l'une quelconque des revendications précédentes, **caractérisé en ce que**
les couches d'adsorbant (5) contiennent des granulés ou de la poudre de charbon actif.
